# EUROPÄISCHE PATENTSCHRIFT

(11) **EP 3 760 796 B1**
(45) Veröffentlichungstag und Bekanntmachung des Hinweises auf die Patenterteilung: **16.08.2023**
(21) Anmeldenummer: 19183896.0
(22) Anmeldetag: 02.07.2019
(51) Int. Cl.: E03C 1/05, E03D 5/10

(54) **ANORDNUNG UMFASSEND EINE BETÄTIGUNGSVORRICHTUNG MIT BENUTZERERKENNUNG FÜR EINE SANITÄRARMATUR UND EINE SANITÄRARMATUR**
DEVICE COMPRISING AN ACTUATING DEVICE WITH USER RECOGNITION FÜR SANITARY FAUCET AND A FAUCET
ARRANGEMENT D'UN DISPOSITIF D'ACTIONNEMENT À DÉTECTION DE L'UTILISATEUR POUR UNE ROBINETTE ET UNE ROBINETTE

(43) Veröffentlichungstag der Anmeldung: 06.01.2021
(73) Patentinhaber: Geberit International AG, 8645 Jona (CH)
(72) Erfinder: OBERHOLZER, Roland, 8610 Uster (CH); MERBOLD, Hannes, 7031 Laax (CH); BITZER, Andreas, 7000 Chur (CH)
(74) Vertreter: Frischknecht, Harry Ralph

(56) Entgegenhaltungen:
- DE-A1- 4 304 345
- DE-U1- 29 502 329
- FR-A5- 2 095 576
- US-B1- 7 336 407

## Beschreibung

### TECHNISCHES GEBIET

Die vorliegende Erfindung betrifft eine Anordnung mit einer Betätigungsvorrichtung mit Benutzererkennung und einer Sanitärarmatur nach Anspruch 1.

### STAND DER TECHNIK

Aus dem Stand der Technik sind Betätigungsplatten zur Benutzererkennung bekannt geworden. Beispielsweise offenbart die EP 3 031 989 eine derartige Betätigungsplatte, wobei Sensoren in einem Gehäuse angeordnet sind.

Die EP 2 497 868 offenbart eine weitere Vorrichtung zur elektrischen Auslösung einer Wasserabgabe, wobei die Sensoren über bestimmte Flächenbereiche in der Frontfläche den Raum vor der Vorrichtung überwachen. Die Vorrichtung nach der EP 2 497 868 stellt eine effiziente Auslösevorrichtung bereit, hat aber den Nachteil, dass das Herstellverfahren für die Frontplatte sehr aufwändig ist.

Aus DE4304345C und DE29502329U sind noch weitere Anordnungen mit einer Betätigungsvorrichtung und einer Sanitärarmatur bekannt.

Der Praxiseinsatz von derartigen Betätigungsplatten hat gezeigt, dass die Funktionssicherheit wesentlich von der Einbausituation abhängig sein kann. Zudem kommt es oft zu Fehlbetätigungen, weil Personen detektiert werden, welche lediglich an der Vorrichtung vorbei gehen und nicht an einer Auslösung interessiert sind. Es kommt zu unerwünschten Geisterspülungen.

### DARSTELLUNG DER ERFINDUNG

Ausgehend von diesem Stand der Technik liegt der Erfindung die Aufgabe zugrunde, eine Anordnung mit einer Sanitärarmatur und einer Betätigungsvorrichtung mit Benutzererkennung zum Zwecke der Auslösung einer Funktion anzugeben, welche die Nachteile des Standes der Technik überwindet. Eine besonders bevorzugte Aufgabe ist es, eine Anordnung anzugeben, welche eine zuverlässigere Benutzerkennung erlaubt.

Diese Aufgabe löst eine Anordnung umfassend eine Sanitärarmatur und eine Betätigungsvorrichtung für die Sanitärarmatur zum Zweck der Auslösung einer Funktion bei erkanntem Benutzer nach dem Anspruch 1. Demgemäss umfasst eine erfindungsgemässe Betätigungsvorrichtung ein Gehäuse mit einer Seitenfläche, die sich in Einbaulage im Wesentlichen in horizontaler Richtung erstreckt, und eine mindestens teilweise im Gehäuse angeordnete Sensoreinheit mit einem Sender zum Aussenden von Lichtwellen und einem Empfänger zur Erfassung der durch einen Benutzer reflektierten Lichtwellen. Die Sensoreinheit ist vorzugsweise eine optoelektronische Sensoreinheit. Die vom Sender ausgesendeten Lichtwellen werden bei Auftreffen auf den Benutzer vom Benutzer reflektiert und können vom Empfänger wieder empfangen werden. Im Bereich der Seitenfläche bzw. in der Seitenfläche ist ein Durchstrahlbereich angeordnet, durch welchen die Lichtwellen abgebbar bzw. die reflektierten Lichtwellen empfangbar sind. Die Betätigungsvorrichtung weist weiterhin eine Optikeinheit auf, welche ebenfalls mindestens teilweise im Gehäuse angeordnet ist. Die Optikeinheit ist derart ausgebildet und angeordnet, dass die Lichtwellen vom Sender in die Optikeinheit einkoppelbar sind und von der Optikeinheit in einem Winkel im Bereich von 5° bis 30°, insbesondere von 10° bis 25°, Horizontalen gesehen durch den Durchstrahlbereich auskoppelbar sind. Die reflektierten Lichtwellen sind in einem zum besagten Winkel gleichen Winkel durch den Durchstrahlbereich in die Optikeinheit einkoppelbar und zum Empfänger auskoppelbar. Der Durchstrahlbereich ist in Einbaulage gegen die Sanitärarmatur gerichtet.

Durch die Anordnung der Optikeinheit ergeht der Vorteil, dass die Lichtwellen in einem vergleichsweise flachen Winkel zur Horizontalen über die Seitenfläche ausgesendet bzw. empfangen werden können. Durch diesen Strahlengang kann die Genauigkeit in der Erkennung von Benutzern stark verbessert werden. Durch die verbesserte Erkennung der Benutzer können Fehlauslösungen der Funktion an der Sanitärarmatur vermieden werden.

Durch die Ausbildung der Betätigungsvorrichtung gemäss obiger Beschreibung ergeht der weitere Vorteil, dass der Durchstrahlbereich derart an der Sanitärarmatur platziert werden, dass dieser bei normaler Benützung, bei welcher ein Benutzer vor der Sanitärarmatur steht, nicht direkt einsehbar ist. Hierdurch ist die Sanitärarmatur sicherer vor Vandalenakten ausgebildet.

Darüber hinaus wird die Anordnung der Sensoreinheit im Inneren des Gehäuses erleichtert.

Durch die Anordnung des Durchstrahlbereichs in der Seitenfläche ergehen weitere Vorteile:
- Verschmutzung: Der Durchstrahlbereich in der Seitenfläche ist besser gegen Wasserspritzer, Fingerabdrücke etc. geschützt.
- Designfreiheit: Durch die Anordnung des Durchstrahlbereichs in der Seitenfläche kann eine Frontfläche des Gehäuses ohne Restriktionen gestaltet werden. Beispielsweise können Oberflächen mit unterschiedlichsten Materialisierung, wie Holz, Stein, Edelstahl, Glas, etc. eingesetzt werden, ohne dass die Funktionsweise negativ beeinflusst werden würde.

Unter der Ausdrucksweise "Gehäuse" wird eine Struktur verstanden, welche die Elemente der Betätigungsvorrichtung mindestens teilweise umgibt. Das Gehäuse kann integraler Bestandteil einer Sanitärarmatur sein oder es kann separat zur Sanitärarmatur angeordnet sein. Das Gehäuse kann dabei ein für den Benutzer sichtbares Gehäuse sein. Das Gehäuse kann aber auch Gehäuseteile umfassen, die für den Benutzer bei normalem Gebrauch nicht einsehbar sind. Ein Beispiel für derartige Gehäuseteile ist beispielsweise ein unterhalb des sichtbaren Gehäuse montierter Rahmen, welcher, sofern er für die Lichtwellen ein Hindernis darstellt, ebenfalls mit einem Durchstrahlbereich ausgebildet ist.

Vorzugsweise umfasst das Gehäuse nebst der Seitenfläche eine Frontfläche. Die Seitenfläche erstreckt sich dabei im Wesentlichen in Richtung der Flächennormalen der Frontfläche von der Frontfläche weg. Die Oberfläche der Frontfläche liegt in Einbaulage vorzugsweise in einer vertikalen Ebene. Bezüglich der Optikeinheit kann auch gesagt werden, dass die Optikeinheit derart ausgebildet und angeordnet ist, dass die Lichtwellen vom Sender in die Optikeinheit einkoppelbar sind und von der Optikeinheit in einem Winkel im Bereich von 5° bis 30°, insbesondere von 10° bis 25°, zur Flächennormalen der Frontfläche gesehen durch den Durchstrahlbereich auskoppelbar sind.

Unter der Ausdrucksweise "Betätigungsvorrichtung" wird eine Vorrichtung verstanden, welche der Auslösung einer sanitären Funktion an einer Sanitärarmatur dient. Beispielsweise kann die Betätigungsvorrichtung eine Betätigungsplatte für die Auslösung einer Spülung an einer Toilette oder einem Urinal sein. Auch kann die Betätigungsvorrichtung eine Platte einer Auslaufarmatur oder ein Gehäuse für ein Dusch-WC oder eine andere sanitäre Vorrichtung sein. Die Betätigungsvorrichtung kann als eigentliche Betätigungsplatte ausgebildet sein. Alternativ kann die Betätigungsvorrichtung auch einen integralen Bestandteil der Sanitärarmatur oder eines anderen Elementes, das in einem Badezimmer eingesetzt wird, wie beispielsweise einem Spiegelschrank etc., sein.

Unter der Ausdrucksweise "Sanitärarmatur" wird eine beliebige Sanitärarmatur verstanden, welcher in einem Badezimmer eingesetzt wird. Beispielsweise seien ein Urinal, eine Toilette, ein Bidet, eine Auslaufarmatur, eine Duschbrause, etc.. genannt.

Wenn die Betätigungsvorrichtung als Betätigungsplatte ausgebildet ist, ist das Gehäuse in Richtung der Flächennormalen auf die Frontfläche betrachtet ein Rechteck oder ein Quadrat, wobei sich von der Frontfläche in Richtung der Flächennormalen von der Kante des Rechtecks oder des Quadrats eine Seitenfläche erstreckt, wobei der Durchstrahlbereich im Bereich der Seitenfläche angeordnet ist. Vorzugsweise ist die Ausdehnung der Seitenfläche in Richtung der Flächennormalen um ein Vielfaches kleiner als die Ausdehnung der Frontfläche quer zur Flächennormalen.

Für die Benutzererkennung wird, je nach Ausbildung der Sensoreinheit, vorzugsweise der Abstand zwischen der Betätigungsvorrichtung und dem zu erkennenden Benutzer mittels Triangulation ermittelt. Das heisst, es wird für die Auswertung der gesendeten und empfangenen Lichtwellen ein Triangulationsverfahren eingesetzt. Andere Auswerteverfahren, wie beispielsweise ein Time-Of-Flight-Verfahren, sind aber auch denkbar.

Vorzugsweise ist die Optikeinheit mit einem Senderbereich zur Weiterleitung der vom Sender ausgesandten Lichtwellen und mit einem Empfängerbereich zur Weiterleitung der reflektierten Lichtwellen zum Empfänger ausgebildet. Der Senderbereich weist eine Einkoppelfläche zur Einkoppelung der Lichtwellen vom Sender in den Senderbereich und eine Auskoppelfläche zur Auskoppelung der Lichtwellen aus dem Senderbereich auf. Der Empfängerbereich weist eine Einkoppelfläche zur Einkoppelung von reflektierten Lichtwellen und eine Auskoppelfläche zur Auskoppelung von Lichtwellen aus dem Empfängerbereich zum Empfänger auf.

Vorzugsweise liegen die Auskoppelfläche des Sendebereichs und die Einkoppelfläche des Empfängerbereichs im Durchstrahlbereich der Seitenfläche. Das heisst, dass die Lichtwellen des Senders aus dem Inneren des Gehäuses durch den Durchstrahlbereich in der Seitenfläche nach aussen geführt werden und dass die reflektieren Lichtwellen durch den Durchstrahlbereich in der Seitenfläche nach innen geführt werden.

Vorzugsweise umfasst die Optikeinheit gemäss einer ersten Variante mindestens ein optisches Prisma mit einer Reflexionsfläche, wobei an der Reflexionsfläche die Lichtwellen bzw. die vom Benutzer reflektierten Lichtwellen totalreflektiert werden. Das optische Prisma stellt ein sehr einfaches Mittel bereit, um die Lichtstrahlen entsprechend den oben beschriebenen Winkeln umzulenken. Die Optikeinheit gemäss einer zweiten Variante umfasst einen Spiegel mit einer Reflexionsfläche, wobei an der Reflexionsfläche die Lichtwellen bzw. die vom Benutzer reflektierten Lichtwellen totalreflektiert werden. Die Reflexionsfläche bei Prisma und Spiegel liegt vorzugsweise winklig geneigt zur Horizontalen und zur Vertikalen. Der Winkel ist von der Anordnung von Sender und Empfänger abhängig.

Bezüglich der Ausbildung des Senderbereichs und des Empfängerbereichs an der Optikeinheit bzw. am optischen Prisma sind verschiedene Varianten denkbar, was in der Folge beschrieben wird.

In einer ersten Variante sind der Senderbereich und der Empfängerbereich an einer einzigen Optikeinheit verwirklicht. Diese Variante hat den Vorteil einer einfachen Struktur.

In einer zweiten Variante sind der Senderbereich und der Empfängerbereich an einer einzigen Optikeinheit mit einer opaken Trennschicht verwirklicht. Die opake Trennschicht ist für die Lichtwellen opak ausgebildet. Durch diese Ausbildung kann ein Übersprechen vom Senderbereich in den Empfängerbereich und umgekehrt weitgehend vermieden werden.

In einer dritten Variante sind der Senderbereich und der Empfängerbereich an jeweils einer von zwei getrennt voneinander angeordneten Optikeinheiten verwirklicht. Durch die Aufteilung auf zwei verschiedene Optikeinheiten ergeht der Vorteil einer grösseren Gestaltungsfreiheit.

Vorzugsweise ist die Auskoppelfläche des Senderbereichs, über welche der Lichtstrahl vom Sender ausgekoppelt wird, mit mindestens einer Oberflächenstruktur versehen. Die Oberflächenstruktur ist derart ausgebildet, dass Reflexionsverluste reduzierbar sind. Alternativ oder zusätzlich ist die Einkoppelfläche des Empfängerbereichs, über welche der reflektierte Lichtstrahl eingekoppelt wird, mit mindestens einer Oberflächenstruktur versehen ist, welche derart ausgebildet ist, dass Reflexionsverluste reduzierbar sind.

Durch die besagte Oberflächenstruktur kann die Auskoppelfläche bzw. die Einkoppelfläche derart optimiert werden, dass flachere Winkel erreichbar werden, weil durch die Oberflächenstruktur eine Totalreflexion vermieden werden kann.

Die Oberflächenstruktur kann verschiedenartig ausgebildet sein. In der Folge werden drei besonders bevorzugte Ausführungsformen genauer erläutert.

Nach einer ersten Ausführungsform ist die Oberflächenstruktur eine Antireflexionsbeschichtung, wobei die Antireflexionsbeschichtung mindestens eine dielektrische Schicht oder mehrere übereinander liegende dielektrischen Schichten aufweist.

Nach einer zweiten Ausführungsform ist die Oberflächenstruktur eine diffraktive Schicht, wobei die diffraktive Schicht vorzugsweise aus einem periodischen Gitter besteht, wobei der Gitterabstand im Bereich von 75 bis 125 Nanometern, insbesondere bei 100 Nanometern liegt.

Nach einer dritten Ausführungsform weist die Oberflächenstruktur eine Linsenstruktur auf, wobei die Linsenstruktur vorzugsweise durch Fresnellinsen mit Stufen bereitgestellt werden.

Die Stufen sind vorzugsweise derart angeordnet, dass es nicht zu einer Abschattung der einzelnen Stufen kommen kann.

Bei einer bevorzugten Weiterbildung der dritten Ausführungsform ist die Linsenstruktur mit einer Antireflexionsbeschichtung beschichtet, wobei die Antireflexionsbeschichtung mindestens eine dielektrische Schicht oder mehrere übereinanderliegende dielektrische Schichten aufweist. Bei einer weiteren bevorzugten Weiterbildung der dritten Ausführungsform kann die Linsenstruktur mit einer diffraktiven Schicht beschichtet sein, wobei die diffraktive Schicht vorzugsweise aus einem periodischen Gitter besteht, wobei der Gitterabstand im Bereich von 75 bis 125 Nanometern, insbesondere bei 100 Nanometern liegt.

In einer ersten Variante wird der Durchstrahlbereich durch einen Durchbruch in der Seitenfläche bereitgestellt, wobei die Auskoppelfläche des Senderbereichs bzw. die Einkoppelfläche des Empfängerbereichs im Wesentlichen bündig zur Seitenfläche ist, in welcher der Durchbruch angeordnet ist.

In einer zweiten Variante wird der Durchstrahlbereich durch einen für den Lichtstrahl vom Sender und für den reflektierten Lichtstrahl transparent ausgebildeten Teilbereich in der Seitenfläche bereitgestellt. Die Auskoppelfläche des Senderbereichs bzw. die Einkoppelfläche des Empfängerbereichs liegen dann von ausserhalb des Gehäuses gesehen hinter dem transparenten Teilbereich.

Bei beiden Varianten liegt der Durchstrahlbereich wie eingangs erläutert in einer Seitenfläche des Gehäuses.

Vorzugsweise liegt der Durchstrahlbereich in Einbaulage gesehen an der Seitenfläche des Gehäuses, welche nach unten hin orientiert ist.

Vorzugsweise ist die optoelektronische Sensoreinheit ein Infrarotsensor mit Infrarotsender und Infrarotempfänger, wobei die Wellenlänge der Lichtwellen im Bereich von 780 bis 1000 Nanometer liegt. Werden andere optoelektronische Sensoreinheiten eingesetzt, so kann der Wellenbereich der Lichtwellen im Bereich von 400 bis 1550 Nanometer liegen. Der Durchstrahlbereich ist in Einbaulage vorzugsweise nach unten gerichtet. Nach unten heisst in diesem Zusammenhang gegen den Fussboden, wobei dann die Lichtwellen in einem flachen Winkel zur Horizontalen gemäss obiger Beschreibung ausgesendet werden können. Der Durchstrahlbereich ist erfindungsgemäss in Einbaulage gegen die Sanitärarmatur gerichtet, und im Bereich der Seitenfläche des Gehäuses bzw. in der Seitenfläche des Gehäuses angeordnet.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Ansicht einer Einbausituation einer Ausführungsform der Betätigungsvorrichtung mit einer Variante einer Sanitärarmatur;
- Fig. 2: eine schematische Ansicht der Betätigungsvorrichtung gemäss der Figur 1 von unten;
- Fig. 3a: eine schematische Schnittansicht der Betätigungsvorrichtung gemäss der Figur 1 mit der Sendereinheit;
- Fig. 3b: eine schematische Schnittansicht der Betätigungsvorrichtung gemäss der Figur 1 mit der Empfängereinheit;
- Fig. 4a: eine erste Weiterbildung der Betätigungsvorrichtung nach den vorhergehenden Figuren;
- Fig. 4b: eine zweite Weiterbildung der Betätigungsvorrichtung nach den vorhergehenden Figuren; und
- Fig. 4c: eine dritte Weiterbildung der Betätigungsvorrichtung nach den vorhergehenden Figuren.

### BESCHREIBUNG BEVORZUGTER AUSFÜHRUNGSFORMEN

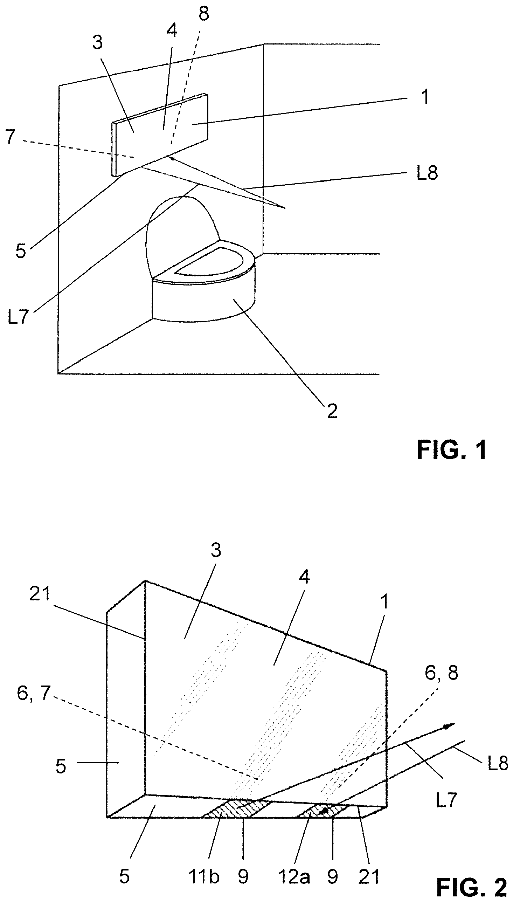

In der Figur 1 wird eine schematische Ansicht eines Badezimmers gezeigt. Im Badezimmer ist eine Betätigungsvorrichtung 1 gemäss einer bevorzugten Ausführungsform der vorliegenden Erfindung angeordnet. Mit der Betätigungsvorrichtung 1 kann eine Funktion an einer Sanitärarmatur 2 ausgelöst werden. In der gezeigten Ausführungsform ist die Sanitärarmatur 2 eine Toilette und die Funktion, die von der Betätigungsvorrichtung 1 ausgelöst wird, ist die Spülung der Toilette. Wie nachfolgend erwähnt ist die Betätigungsvorrichtung 1 derart ausgebildet, dass von einem Sender 7 Lichtwellen L7 ausgesendet werden und von einem Empfänger 8 die durch einen Benutzer reflektierten Lichtwellen L8 wieder erfasst werden können. Hierdurch kann der Benutzer als solches erkannt werden und die Funktion ausgelöst werden oder aber es kann die Distanz zum Benutzer gemessen werden, sodass der Abstand zur Sanitärarmatur 2 bestimmt werden kann, wobei dann, basierend auf dem Abstand, die Funktion ausgelöst wird.

In der Figur 2 wird eine bevorzugte Ausführung der Anordnung von Sender 7 und Empfänger 8 gezeigt. Der Sender 7 und der Empfänger 8 sind dabei derart angeordnet, dass die Lichtwellen L7 von Sender 7 und die Lichtwellen L8 vom Empfänger 8 über eine Seitenfläche 5 der Betätigungsvorrichtung 1 ausgesendet beziehungsweise empfangen werden. Die Seitenfläche 5 liegt in der gezeigten Ausführungsform in der Horizontalen und ist gegen die Sanitärarmatur 2 gerichtet. Die Lichtwellen L7, L8 werden, wie unten im Detail beschrieben, in einem flachen Winkel winklig geneigt zur Flächennormalen F der Frontfläche 4 des Gehäuses 3 ausgesendet.

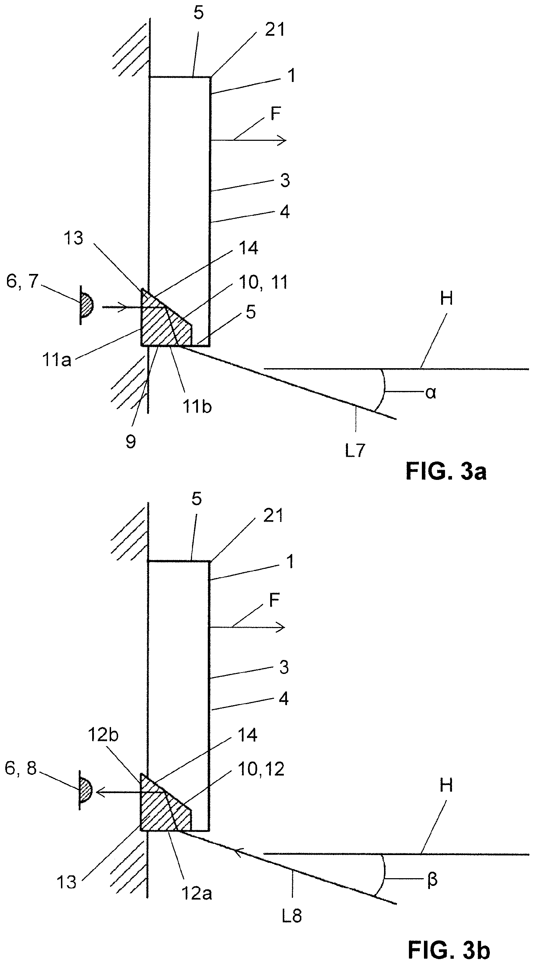

Unter Bezugnahme auf die Figuren 2 und 3a sowie 3b wird nun die Betätigungsvorrichtung 1 genauer beschrieben.

Das Gehäuse 3 umfasst, wie erwähnt, eine Frontfläche 4 und eine Seitenfläche 5. Die Seitenfläche 5 des Gehäuses 3 erstreckt sich, wie in den Figuren gezeigt, in Richtung der Flächennormalen F der Frontfläche 4 von der Frontfläche 4 weg. Die Seitenfläche 5 erstreckt sich dabei von jeder Seitenkante 21 der Frontfläche 4 nach hinten hin weg. In Einbaulage sind die Seitenflächen 5 freiliegend. Das heisst, die Seitenflächen 5 werden nicht durch Teile vom Gebäude, wie Mauerwerk, Fliesen, etc. überdeckt. Die Frontfläche 4 ist vorzugsweise optisch opak ausgebildet.

Weiter umfasst die Betätigungsvorrichtung 1 eine mindestens teilweise im Gehäuse 3 angeordnete Sensoreinheit 6 mit einem Sender 7 zum Aussenden von Lichtwellen L7 und einem Empfänger 8 zur Erfassung der durch einen Benutzer reflektierten Lichtwellen L8. In der Figur 3a ist der Sender 7 und der Strahlengang der Lichtwellen L7 vom Sender 7 aus dem Gehäuse 3 dargestellt. In der Figur 3b ist der Empfänger 8 und der Strahlengang der Lichtwellen L8 in das Gehäuse 3 zum Empfänger 8 hin dargestellt.

Im Bereich der Seitenfläche 5 bzw. in der Seitenfläche 5 selbst ist ein Durchstrahlbereich 9 angeordnet, durch welchen die Lichtwellen L7 abgebbar sind bzw. durch welchen die reflektierten Lichtwellen L8 empfangbar sind. Durch diesen Durchstrahlbereich 9 können die entsprechenden Lichtwellen L7, L8 aus bzw. in das Gehäuse 3 gesendet werden.

Von den Figuren 3a und 3b wird gezeigt, dass die Betätigungsvorrichtung 1 weiterhin eine Optikeinheit 10 aufweist. Die Optikeinheit 10 ist dabei derart ausgebildet und angeordnet, dass die Lichtwellen L7 vom Sender in die Optikeinheit 10 einkoppelbar sind und von der Optikeinheit 10 in einem Winkel α winklig geneigt zur Flächennormalen F der Frontfläche 4 durch den Durchstrahlbereich 9 auskoppelbar sind. Weiter ist die Optikeinheit 10 derart ausgebildet und angeordnet, dass die Lichtwellen L8 die Optikeinheit 10 in einem Winkel β winklig geneigt zur Flächennormalen F der Frontfläche 4 einkoppelbar sind und von der Optikeinheit 10 zum Empfänger 8 auskoppelbar sind. Der Winkel α und der Winkel β liegen vorzugsweise im Bereich von 5° bis 30°, insbesondere im Bereich von 10° bis 25° zur Flächennormalen F der Frontfläche 4.

Im Inneren des Gehäuses 3 werden die Lichtwellen L7, L8 wieder in Richtung der Flächennormalen F geführt. In anderen Varianten wäre es auch denkbar, die Lichtwellen L7, L8 in einer anderen Richtung, insbesondere winklig geneigt zur Flächennormalen F zu führen.

Die Frontfläche 4 liegt typischerweise in Einbaulage gesehen in der Vertikalen und die Flächennormale F liegt demnach in der Horizontalen H. Der Winkel α bzw. der Winkel β erstreckt sich dabei von der Horizontalen H im Wesentlichen nach unten.

Die Optikeinheit 10 umfasst einen Senderbereich 11 und einen Empfängerbereich 12. Vom Sender 7 werden die Lichtwellen L7 in eine Einkoppelfläche 11a in den Senderbereich 11 eingekoppelt und über eine Auskoppelfläche 11b werden die Lichtwellen L7 aus dem Senderbereich 11 wieder ausgekoppelt. Der Empfängerbereich 12 ist im Wesentlichen identisch zum Senderbereich 11 ausgebildet. Der Empfängerbereich 12 weist eine Einkoppelfläche 12a zur Einkopplung der reflektierten Lichtwellen L8 und eine Auskoppelfläche 12b zur Auskopplung der Lichtwellen L8 aus dem Empfängerbereich 12 zum Empfänger 8 auf.

Die Auskoppelfläche 11b des Senderbereichs 11 und die Einkoppelfläche 12a des Empfängerbereichs 12 liegen im Durchstrahlbereich 9 der Seitenfläche 5. Die Auskoppelfläche 11b und die Einkoppelfläche 12a liegen derart, dass die Lichtwellen L7 bzw. L8 in die oben beschriebene Richtung auskoppelbar bzw. einkoppelbar sind. Der Durchstrahlbereich ist vorzugsweise ein Durchbruch 21 in der Seitenfläche 5. Das heisst, die Auskoppelfläche 11b des Senderbereichs 11 bzw. die Einkoppelfläche 12a des Empfängerbereichs 12 im Durchbruch 21 liegen. Besonders bevorzugt liegen die Auskoppelfläche 11b und die Einkoppelfläche 12a bündig zur Seitenfläche 5. Der Durchstrahlbereich kann in einer anderen, in den Figuren nicht gezeigten Ausführungsform, auch durch einen transparent ausgebildeten Teilbereich in der Seitenfläche 5 bereitgestellt werden.

Der Senderbereich 11 und der Empfängerbereich 12 können an einer einzigen Optikeinheit 10 oder aber an zwei getrennt voneinander angeordneten Optikeinheiten 10 verwirklicht sein. Bei der einzigen Optikeinheit 10 ist es zudem denkbar, dass der Senderbereich 11 und der Empfängerbereich 12 mit einer opaken Trennschicht getrennt voneinander sind. Hierdurch kann ein Übersprechen zwischen Senderbereich 11 und Empfängerbereich 12 verhindert werden.

Die Optikeinheit 10 ist in der gezeigten Ausführungsform ein optisches Prisma 13 mit einer Reflexionsfläche 14. Der Senderbereich 11 und der Empfängerbereich 12 können dabei am gleichen Prisma oder an unterschiedlichen Prismen angeordnet sein. Wie von der Figur 3a und 3b gezeigt, werden die Lichtwellen L7 bzw. die von Benutzer reflektierten Lichtwellen L8 der Reflexionsfläche 14 totalreflektiert. In der gezeigten Ausführungsform treffen die Lichtwellen L7 in Richtung der Flächennormalen F vom Sender 7 auf die Einkoppelfläche 11a des Senderbereichs 11 und werden durch die Reflexionsfläche 14 entsprechend reflektiert. Anschliessend werden die Lichtwellen L7 dann über die Auskoppelfläche 11b des Senderbereichs 11 des optischen Prismas 13 wieder ausgekoppelt. Die Auskopplung erfolgt unter dem oben beschriebenen Winkel α. Die Lichtwellen L8 treffen in Richtung des Winkels b auf die Einkoppelfläche 12b auf und werden in das optische Prisma 13 eingekoppelt. An der Reflexionsfläche 14 werden die Lichtwellen L8 totalreflektiert und dann in Richtung der Flächennormalen F aus der Auskoppelfläche 12b zum Empfänger 8 hin ausgekoppelt.

Anstelle eines optischen Prismas kann die Optikeinheit auch andere optische Elemente umfassen, welche die Lichtwellen L7, L8 entsprechend umlenken.

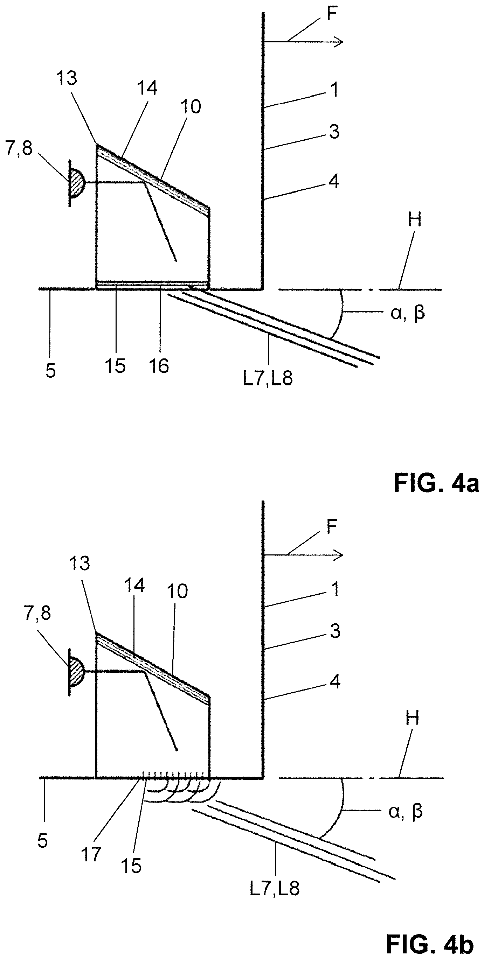

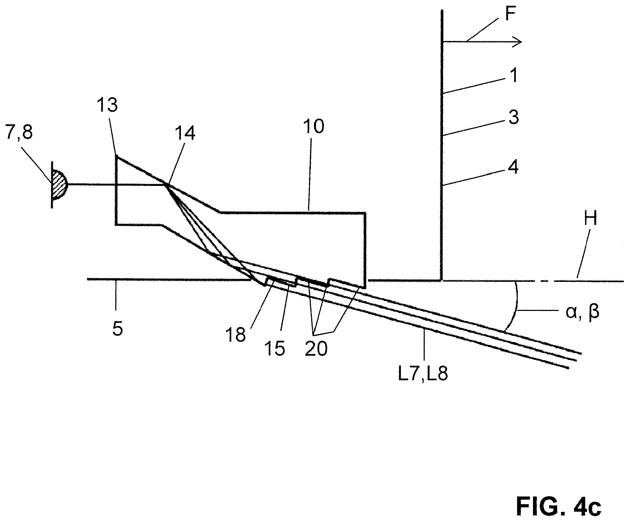

Die Auskoppelfläche 11b des Senderbereichs 11, über welche der Lichtstrahl L7 vom Sender 7 ausgekoppelt wird, kann, wie von den Figuren 4a bis 4c gezeigt, mit mindestens einer Oberflächenstruktur 15 versehen sein. Gleichermassen kann auch die Einkoppelfläche 12a des Empfängerbereichs 12, über welche der reflektierte Lichtstrahl L8 angekoppelt wird, mit mindestens einer Oberflächenstruktur 15 versehen sein. Die Oberflächenstrukturen 15 sind dabei derart ausgebildet, dass Reflexionsverluste reduzierbar sind. In der Folge werden drei verschiedene Ausführungsformen der Oberflächenstruktur 15 genauer erläutert, wobei diese Ausführungsformen sowohl für die Auskoppelfläche 11b des Senderbereichs als auch für die Einkoppelfläche 12a des Empfängerbereichs 12 einsetzbar sind.

In der Figur 4a wird die Oberflächenstruktur 15 gemäss einer ersten Ausführungsform gezeigt. Gemäss dieser ersten Ausführungsform ist die Oberflächenstruktur 15 eine Antireflexionsbeschichtung 16. Die Antireflexionsbeschichtung 16 ist vorzugsweise mindestens eine oder aber mehrere übereinanderliegende dielektrische Schichten. Über derartige Schichten kann das Reflexionsverhalten im Bereich der Auskoppelfläche 11a beziehungsweise der Einkoppelfläche 12a verbessert werden. Hierdurch wird ein möglichst kleiner Winkel α erreicht.

Gemäss der zweiten Ausführungsform der Figur 4b ist die Oberflächenstruktur 15 eine diffraktive Schicht 17. Die diffraktive Schicht 17 besteht vorzugsweise aus einem periodischen Gitter. Der Gitterabstand beim periodischen Gitter liegt im Bereich von 75 bis 125 Nanometern, insbesondere bei 100 Nanometern. Auch die diffraktive Schicht 17 hat den Vorteil, dass ein möglichst kleiner Winkel α erreicht werden kann.

In der Figur 4b wird eine dritte Ausführungsform der Oberflächenstruktur 15 gezeigt. Hier ist die Oberflächenstruktur 15 eine Linsenstruktur 18. Vorzugsweise wird die Linsenstruktur 18 mit Fresnellinsen 19 mit entsprechenden Stufen 20 bereitgestellt. Die Stufen 20 sind dabei derart ausgebildet, dass der Lichtstrahl mehrfach aus jeder Linse austreten kann, wobei sich die einzelnen Fresnellinsen 19 nicht beschatten.

Die Linsenstruktur 18 kann weiter mit der Antireflexionsbeschichtung 16 gemäss der ersten Ausführungsform oder aber mit einer diffraktiven Schicht 17 gemäss der zweiten Ausführungsform beschichtet sein. Hierdurch können die Austrittsergebnisse der Lichtwellen L7 beziehungsweise die Eintrittsergebnisse der Lichtwellen L8 weiter verbessert werden.

Die optoelektronische Sensoreinheit 6 ist vorzugsweise ein Infrarotsensor mit einem Infrarotsender und einem Infrarotempfänger. Der Infrarotsender ist dabei der hierhin erwähnte Sender 7 und der Infrarotempfänger ist der hierhin erwähnte Empfänger 8. Andere elektronische Sensoren sind auch möglich, insoweit von den Ansprüchen gedeckt.

### BEZUGSZEICHENLISTE

| | | | |
|---|---|---|---|
| 1 | Betätigungsvorrichtung | 17 | diffraktive Schicht |
| 2 | Sanitärarmatur | 18 | Linsenstruktur |
| 3 | Gehäuse | 19 | Fresnellinsen |
| 4 | Frontfläche | 20 | Stufen |
| 5 | Seitenfläche | 21 | Seitenkante |
| 6 | Sensoreinheit | | |
| 7 | Sender | α | Winkel |
| 8 | Empfänger | β | Winkel |
| 9 | Durchstrahlbereich | | |
| 10 | Optikeinheit | F | Flächennormale |
| 11 | Senderbereich | H | Horizontale |
| 11a | Einkoppelfläche | | |
| 11b | Auskoppelfläche | L7 | Lichtwellen vom Sender |
| 12 | Empfängerbereich | L8 | Lichtwellen zum Empfänger |
| 12a | Einkoppelfläche | | |
| 12b | Auskoppelfläche | | |
| 13 | optisches Prisma | | |
| 14 | Reflexionsfläche | | |
| 15 | Oberflächenstruktur | | |
| 16 | Antireflexionsbeschichtung | | |

## Patentansprüche

1. Anordnung umfassend eine Betätigungsvorrichtung (1) für eine Sanitärarmatur (2) zum Zweck der Auslösung einer Funktion bei erkanntem Benutzer sowie eine Sanitärarmatur (2),
wobei die Betätigungsvorrichtung
ein Gehäuse (3) mit einer Seitenfläche (5), die sich in Einbaulage im Wesentlichen in horizontaler Richtung erstreckt,
und
eine mindestens teilweise im Gehäuse (3) angeordnete Sensoreinheit (6), insbesondere eine optoelektronische Sensoreinheit (6), mit einem Sender (7) zum Aussenden von Lichtwellen (L7) und einem Empfänger (8) zur Erfassung der durch einen Benutzer reflektierten Lichtwellen (L8), umfasst,
wobei im Bereich der Seitenfläche (5) bzw. in der Seitenfläche (5) ein Durchstrahlbereich (9) angeordnet ist, durch welchen die Lichtwellen (L7) abgebbar bzw. die reflektierten Lichtwellen (L8) empfangbar sind,
wobei die Betätigungsvorrichtung (1) weiterhin eine Optikeinheit (10) aufweist,
wobei die Optikeinheit (10) derart ausgebildet und angeordnet ist, dass die Lichtwellen (L7) vom Sender in die Optikeinheit (10) einkoppelbar sind und von der Optikeinheit (10) in einem Winkel (α) im Bereich von 5° bis 30°, insbesondere von 10° bis 25°, zur Horizontalen gesehen durch den Durchstrahlbereich (9) auskoppelbar sind,
wobei die reflektierten Lichtwellen (L8) in einem zum besagten Winkel (α) gleichen Winkel (β) durch den Durchstrahlbereich (9) in die Optikeinheit (10) einkoppelbar und zum Empfänger (8) auskoppelbar sind und
wobei der Durchstrahlbereich (9) in Einbaulage gegen die Sanitärarmatur (2) gerichtet ist.

2. Anordnung nach Anspruch 1, **dadurch gekennzeichnet, dass** die Optikeinheit (10) mit einem Senderbereich (11) zur Weiterleitung der vom Sender (7) ausgesandten Lichtwellen (L7) und mit einem Empfängerbereich (12) zur Weiterleitung der reflektierten Lichtwellen (L8) zum Empfänger (8) ausgebildet ist,
wobei der Senderbereich (11) eine Einkoppelfläche (11a) zur Einkoppelung der Lichtwellen (L7) vom Sender (7) in den Senderbereich (11) und eine Auskoppelfläche (11b) zur Auskoppelung der Lichtwellen aus dem Senderbereich (11) aufweist, und
wobei der Empfängerbereich (12) eine Einkoppelfläche (12a) zur Einkoppelung von reflektierten Lichtwellen (L8) und eine Auskoppelfläche (12b) zur Auskoppelung von Lichtwellen (L8) aus dem Empfängerbereich (12) zum Empfänger (8) aufweist.

3. Anordnung nach Anspruch 2, **dadurch gekennzeichnet, dass** die Auskoppelfläche (11b) des Sendebereichs (11) und die Einkoppelfläche (12a) des Empfängerbereichs (12) im Durchstrahlbereich (9) der Seitenfläche (5) liegen.

4. Anordnung nach einem der vorhergehenden Ansprüche, **dadurch gekennzeichnet, dass** die Optikeinheit (10) mindestens ein optisches Prisma (13) mit einer Reflexionsfläche (14) umfasst, wobei an der Reflexionsfläche (14) die Lichtwellen (L7) bzw. die vom Benutzer reflektierten Lichtwellen (L8) totalreflektiert werden; oder dass die Optikeinheit (10) ein Spiegel mit einer Reflexionsfläche (14) umfasst, wobei an der Reflexionsfläche (14) die Lichtwellen (L7) bzw. die vom Benutzer reflektierten Lichtwellen (L8) totalreflektiert werden.

5. Anordnung nach einem der vorhergehenden Ansprüche 2 bis 4, **dadurch gekennzeichnet, dass** der Senderbereich (11) und der Empfängerbereich (12) an einer einzigen Optikeinheit (10) verwirklicht sind; oder dass der Senderbereich (11) und der Empfängerbereich (12) an einer einzigen Optikeinheit (10) mit einer opaken Trennschicht zwischen Senderbereich (11) und Empfängerbereich (12) verwirklicht sind; oder dass der Senderbereich (11) und der Empfängerbereich (12) an jeweils einer von zwei getrennt voneinander angeordneten Optikeinheiten (10) verwirklicht sind.

6. Anordnung nach einem der vorhergehenden Ansprüche 2 bis 5, **dadurch gekennzeichnet, dass** die Auskoppelfläche (1 1b) des Senderbereichs (11), über welche der Lichtstrahl (L7) vom Sender (7) ausgekoppelt wird, mit mindestens einer Oberflächenstruktur (15) versehen ist, welche derart ausgebildet ist, dass Reflexionsverluste reduzierbar sind; und/oder dass die Einkoppelfläche (12a) des Empfängerbereichs (12), über welche der reflektierte Lichtstrahl (L8) eingekoppelt wird, mit mindestens einer Oberflächenstruktur (15) versehen ist, welche derart ausgebildet ist, dass Reflexionsverluste reduzierbar sind.

7. Anordnung nach Anspruch 6, **dadurch gekennzeichnet, dass** die Oberflächenstruktur (15) eine Antireflexionsbeschichtung (16) ist, wobei die Antireflexionsbeschichtung (16) mindestens eine dielektrische Schicht oder mehrere übereinanderliegende dielektrischen Schichten aufweist.

8. Anordnung nach Anspruch 6, **dadurch gekennzeichnet, dass** die Oberflächenstruktur (15) eine diffraktive Schicht (17) ist, wobei die diffraktive Schicht (17) vorzugsweise aus einem periodischen Gitter besteht, wobei der Gitterabstand im Bereich von 75 bis 125 Nanometern, insbesondere bei 100 Nanometern liegt.

9. Anordnung nach Anspruch 6, **dadurch gekennzeichnet, dass** die Oberflächenstruktur (15) eine Linsenstruktur (18) aufweist, wobei die Linsenstruktur (18) vorzugsweise durch Fresnellinsen (19) mit Stufen (20) bereitgestellt werden.

10. Anordnung nach Anspruch 9, **dadurch gekennzeichnet, dass** die Linsenstruktur (18) mit einer Antireflexionsbeschichtung (16) beschichtet ist, wobei die Antireflexionsbeschichtung (16) mindestens eine dielektrische Schicht oder mehrere übereinander liegende dielektrischen Schichten aufweist; und/oder dass die Linsenstruktur (18) mit einer diffraktiven Schicht (17) beschichtet ist, wobei die diffraktive Schicht (17) vorzugsweise aus einem periodischen Gitter besteht, wobei der Gitterabstand im Bereich von 75 bis 125 Nanometern, insbesondere bei 100 Nanometern liegt.

11. Anordnung nach einem der vorhergehenden Ansprüche 2 bis 10, **dadurch gekennzeichnet, dass** der Durchstrahlbereich (9) durch einen Durchbruch (21) in der Seitenfläche (5) bereitgestellt wird, wobei die Auskoppelfläche (11b) des Senderbereichs (11) und/oder die Einkoppelfläche (12a) des Empfängerbereichs (12) im Wesentlichen bündig zur Seitenfläche (5) ist, in welcher der Durchbruch (21) angeordnet ist.

12. Anordnung nach einem der vorhergehenden Ansprüche 1 bis 10, **dadurch gekennzeichnet dass** der Durchstrahlbereich (9) durch einen für den Lichtstrahl (L7) vom Sender und für den reflektierten Lichtstrahl (L8) transparent ausgebildeten Teilbereich in der Seitenfläche (5) bereitgestellt wird.

13. Anordnung nach einem der vorhergehenden Ansprüche, **dadurch gekennzeichnet, dass** der Durchstrahlbereich (9) in Einbaulage gesehen an der Seitenfläche (5) liegt, welche nach unten hin orientiert ist.

14. Anordnung nach einem der vorhergehenden Ansprüche, **dadurch gekennzeichnet, dass** die optoelektronische Sensoreinheit (6) ein Infrarotsensor mit Infrarotsender und Infrarotempfänger ist, wobei die Wellenlänge der Lichtwellen im Bereich von 780 bis 1000 Nanometer liegt.

## Claims

1. Arrangement comprising an actuation device (1) for a sanitary fitting (2) for the purpose of triggering a function, in case of a recognized user and a sanitary fitting (2),
wherein the actuation device (1) comprises
a housing (3) having a side face (5) which extends substantially in a horizontal direction in the installation position,
and
a sensor unit (6) arranged at least partially in the housing (3), in particular an optoelectronic sensor unit (6), having an emitter (7) for emitting light waves (L7) and a receiver (8) for detecting the light waves (L8) reflected by a user,
wherein a transmission region (9), through which the light waves (L7) can be delivered and the reflected light waves (L8) can be received, respectively, is arranged in the region of the side face (5) or in the side face (5), and
wherein the actuation device (1) furthermore comprises an optical unit (10),
wherein the optical unit (10) being configured and arranged in such a way that the light waves (L7) from the emitter can be input into the optical unit (10) and can be output from the optical unit (10) at an angle (α) in the range of from 5° to 30°, in particular from 10° to 25°, as seen with respect to the horizontal through the transmission region (9),
wherein the reflected light waves (L8) being capable of being input at an angle (α) equal to said angle (α) through the transmission region (9) into the optical unit (10) and of being output to the receiver (8) and
wherein the transmission region (9) being directed towards the sanitary fitting (2) in the installation position.

2. Arrangement according to Claim 1, **characterized in that** the optical unit (10) is configured with an emitter region (11) for forwarding the light waves (L7) emitted by the emitter (7) and with a receiver region (12) for forwarding the reflected light waves (L8) to the receiver (8),
the emitter region (11) comprising an input face (11a) for input of the light waves (L7) from the emitter (7) into the emitter region (11) and an output face (11b) for output of the light waves from the emitter region (11), and
the receiver region (12) comprising an input face (12a) for input of reflected light waves (L8) and an output face (12b) for output of light waves (L8) from the receiver region (12) to the receiver (8).

3. Arrangement according to Claim 2, **characterized in that** the output face (11b) of the emitter region (11) and the input face (12a) of the receiver region (12) lie in the transmission region (9) of the side face (5).

4. Arrangement according to one of the preceding claims, **characterized in that** the optical unit (10) comprises at least one optical prism (13) having a reflection face (14), the light waves (L7) or the light waves (L8) reflected by the user, respectively, being totally reflected at the reflection face (14); or **in that** the optical unit (10) comprises a mirror having a reflection face (14), the light waves (L7) or the light waves (L8) reflected by the user, respectively, being totally reflected at the reflection face (14).

5. Arrangement according to one of the preceding claims 2 to 4, **characterized in that** the emitter region (11) and the receiver region (12) are implemented on a single optical unit (10); or **in that** the emitter region (11) and the receiver region (12) are implemented on a single optical unit (10) having an opaque separating layer between emitter region (11) and receiver region (12); or **in that** the emitter region (11) and the receiver region (12) are respectively implemented on one of two optical units (10) arranged separated from one another.

6. Arrangement according to one of the preceding claims 2 to 5, **characterized in that** the output face (11b) of the emitter region (11), through which the light beam (L7) from the emitter (7) is output, is provided with at least one surface structure (15) which is configured in such a way that reflection losses can be reduced; and/or **in that** the input face (12a) of the receiver region (12), through which the reflected light beam (L8) is input, is provided with at least one surface structure (15) which is configured in such a way that reflection losses can be reduced.

7. Arrangement according to Claim 6, **characterized in that** the surface structure (15) is an antireflection coating (16), the antireflection coating (16) comprising at least one dielectric layer or a plurality of dielectric layers above one another.

8. Arrangement according to Claim 6, **characterized in that** the surface structure (15) is a diffractive layer (17), the diffractive layer (17) preferably consisting of a periodic grating, the grating spacing being in the range of from 75 to 125 nanometres, in particular 100 nanometres.

9. Arrangement according to Claim 6, **characterized in that** the surface structure (15) comprises a lens structure (18), the lens structure (18) preferably being provided by Fresnel lenses (19) having steps (20).

10. Arrangement according to Claim 9, **characterized in that** the lens structure (18) is coated with an antireflection coating (16), the antireflection coating (16) comprising at least one dielectric layer or a plurality of dielectric layers above one another; and/or **in that** the lens structure (18) is coated with a diffractive layer (17), the diffractive layer (17) preferably consisting of a periodic grating, the grating spacing being in the range of from 75 to 125 nanometres, in particular 100 nanometres.

11. Arrangement according to one of the preceding claims 2 to 10, **characterized in that** the transmission region (9) is provided by an opening (21) in the side face (5), the output face (11b) of the emitter region (11) and/or the input face (12a) of the receiver region (12) being substantially flush with the side face (5) in which the opening (21) is arranged.

12. Arrangement according to one of the preceding claims 1 to 10, **characterized in that** the transmission region (9) is provided by a subregion in the side face (5) which is configured to be transparent for the light beam (L7) from the emitter and for the reflected light beam (L8).

13. Arrangement according to one of the preceding claims, **characterized in that** the transmission region (9) as seen in the installation position lies on the side face (5), which is oriented downwards.

14. Arrangement according to one of the preceding claims, **characterized in that** the optoelectronic sensor unit (6) is an infrared sensor having an infrared emitter and an infrared receiver, the wavelength of the light waves being in the range of from 780 to 1000 nanometres.

## Revendications

1. Agencement comprenant un dispositif d'actionnement (1) pour une robinetterie sanitaire (2) dans le but de déclencher une fonction lorsque un utilisateur est reconnu, ainsi qu'une robinetterie sanitaire (2),
le dispositif d'actionnement comprenant
un boîtier (3) avec une surface latérale (5) qui, en position de montage, s'étend essentiellement en direction horizontale,
et
une unité de détection (6) disposée au moins partiellement dans le boîtier (3), en particulier une unité de détection optoélectronique (6), avec un émetteur (7) pour émettre des ondes lumineuses (L7) et un récepteur (8) pour détecter les ondes lumineuses (L8) réfléchies par un utilisateur,
une zone de passage de rayonnement (9) à travers laquelle les ondes lumineuses (L7) peuvent être émises ou les ondes lumineuses réfléchies (L8) peuvent être reçues étant disposée au niveau de la surface latérale (5) ou dans la surface latérale (5),
le dispositif d'actionnement (1) comprenant en outre une unité optique (10),
l'unité optique (10) étant conçue et disposée de telle sorte que les ondes lumineuses (L7) peuvent être couplées de l'émetteur à l'unité optique (10) et peuvent être couplées hors de l'unité optique (10) à travers la zone de passage de rayonnement (9) selon un angle (α) dans la plage de 5° à 30°, en particulier de 10° à 25°, vu par rapport à l'horizontale,
les ondes lumineuses réfléchies (L8) pouvant être couplées dans l'unité optique (10) par la zone de passage de rayonnement (9) et couplées hors de l'unité optique (10) vers le récepteur (8) selon un angle (β) égal audit angle (α), et
la zone de passage de rayonnement (9) étant orientée vers la robinetterie sanitaire (2) en position de montage.

2. Agencement selon la revendication 1, **caractérisé en ce que** l'unité optique (10) est réalisée avec une zone d'émission (11) pour la transmission des ondes lumineuses (L7) émises par l'émetteur (7) et avec une zone de réception (12) pour la transmission des ondes lumineuses réfléchies (L8) au récepteur (8),
la zone d'émetteur (11) présentant une surface de couplage d'entrée (lia) pour le couplage des ondes lumineuses (L7) de l'émetteur (7) dans la zone d'émetteur (11) et une surface de couplage de sortie (11b) pour le couplage des ondes lumineuses hors de la zone d'émetteur (11), et
la zone de réception (12) présentant une surface de couplage d'entrée (12a) pour le couplage d'entrée des ondes lumineuses réfléchies (L8) et une surface de couplage de sortie (12b) pour le couplage de sortie d'ondes lumineuses (L8) de la zone de réception (12) au récepteur (8).

3. Agencement selon la revendication 2, **caractérisé en ce que** la surface de couplage de sortie (11b) de la zone d'émission (11) et la surface de couplage d'entrée (12a) de la zone de réception (12) se trouvent dans la zone de passage de rayonnement (9) de la surface latérale (5).

4. Agencement selon l'une quelconque des revendications précédentes, **caractérisé en ce que** l'unité optique (10) comprend au moins un prisme optique (13) avec une surface de réflexion (14), les ondes lumineuses (L7) ou les ondes lumineuses (L8) réfléchies par l'utilisateur étant totalement réfléchies par la surface de réflexion (14); ou **en ce que** l'unité optique (10) comprend un miroir avec une surface de réflexion (14), les ondes lumineuses (L7) ou les ondes lumineuses (L8) réfléchies par l'utilisateur étant totalement réfléchies par la surface de réflexion (14).

5. Agencement selon l'une quelconque des revendications précédentes 2 à 4, **caractérisé en ce que** la zone d'émission (11) et la zone de réception (12) sont réalisées dans une seule unité optique (10); ou **en ce que** la zone d'émission (11) et la zone de réception (12) sont réalisées dans une seule unité optique (10) avec une couche de séparation opaque entre la zone d'émission (11) et la zone de réception (12); ou **en ce que** la zone d'émission (11) et la zone de réception (12) sont réalisées chacune sur l'une de deux unités optiques (10) disposées séparément.

6. Agencement selon l'une quelconque des revendications précédentes 2 à 5, **caractérisé en ce que** la surface de couplage de sortie (11b) de la zone d'émission (11), par laquelle le faisceau lumineux (L7) est couplé hors de l'émetteur (7), est pourvue d'au moins une structure de surface (15) qui est conçue de telle sorte que les pertes par réflexion peuvent être réduites; et/ou **en ce que** la surface de couplage d'entrée (12a) de la zone de réception (12), par laquelle le faisceau lumineux réfléchi (L8) est couplé, est pourvue d'au moins une structure de surface (15) qui est conçue de telle sorte que les pertes par réflexion peuvent être réduites.

7. Agencement selon la revendication 6, **caractérisé en ce que** la structure de surface (15) est un revêtement antiréfléchissant (16), le revêtement antiréfléchissant (16) comprenant au moins une couche diélectrique ou plusieurs couches diélectriques superposées.

8. Agencement selon la revendication 6, **caractérisé en ce que** la structure de surface (15) est une couche diffractive (17), la couche diffractive (17) étant de préférence constituée d'un réseau périodique, la distance entre les réseaux étant comprise dans la plage de 75 à 125 nanomètres, en particulier étant de 100 nanomètres.

9. Agencement selon la revendication 6, **caractérisé en ce que** la structure de surface (15) comprend une structure de lentilles (18), la structure de lentilles (18) étant de préférence fournie par des lentilles de Fresnel (19) avec des gradins (20).

10. Agencement selon la revendication 9, **caractérisé en ce que** la structure de lentille (18) est revêtue d'un revêtement antiréfléchissant (16), le revêtement antiréfléchissant (16) comprenant au moins une couche diélectrique ou plusieurs couches diélectriques superposées; et/ou **en ce que** la structure de lentille (18) est revêtue d'une couche diffractive (17), la couche diffractive (17) étant de préférence constituée d'un réseau périodique, la distance entre les réseaux étant comprise dans la plage de 75 à 125 nanomètres, en particulier étant de 100 nanomètres.

11. Agencement selon l'une quelconque des revendications précédentes 2 à 10, **caractérisé en ce que** la zone de passage de rayonnement (9) est fournie par une ouverture (21) dans la surface latérale (5), la surface de couplage de sortie (11b) de la zone d'émission (11) et/ou la surface de couplage d'entrée (12a) de la zone de réception (12) étant essentiellement à fleur de la surface latérale (5) dans laquelle l'ouverture (21) est située.

12. Agencement selon l'une quelconque des revendications précédentes 1 à 10, **caractérisé en ce que** la zone de passage de rayonnement (9) est fournie par une zone partielle dans la surface latérale (5) qui est transparente pour le faisceau lumineux (L7) provenant de l'émetteur et pour le faisceau lumineux réfléchi (L8).

13. Agencement selon l'une quelconque des revendications précédentes, **caractérisé en ce que** la zone de passage de rayonnement (9), vue en position de montage, se situe sur la face latérale (5) qui est orientée vers le bas.

14. Agencement selon l'une quelconque des revendications précédentes, **caractérisé en ce que** l'unité de détection optoélectronique (6) est un capteur infrarouge avec un émetteur infrarouge et un récepteur infrarouge, la longueur d'onde des ondes lumineuses étant comprise dans la plage de 780 à 1000 nanomètres.
